# EUROPEAN PATENT SPECIFICATION

(11) **EP 4 024 152 B1**
(45) Date of publication and mention of the grant of the patent: **19.02.2025**
(21) Application number: 20856106.8
(22) Date of filing: 21.07.2020
(51) Int. Cl.: G05D 1/00

(54) **TRANSPORT SYSTEM, CONTROL DEVICE, TRANSPORT METHOD, AND PROGRAM**
TRANSPORTSYSTEM, STEUERVORRICHTUNG, TRANSPORTVERFAHREN UND PROGRAMM
SYSTÈME DE TRANSPORT, DISPOSITIF DE COMMANDE, PROCÉDÉ DE TRANSPORT ET PROGRAMME

(30) Priority: 26.08.2019 JP 2019153964
(43) Date of publication of application: 06.07.2022
(73) Proprietor: NEC Corporation, 108-8001 Tokyo (JP)
(72) Inventor: YOSHIDA, Hiroshi, Tokyo 108-8001 (JP); KUMAGAI, Taichi, Tokyo 108-8001 (JP); YASUDA, Shinya, Tokyo 108-8001 (JP)
(74) Representative: Reddie & Grose LLP
(86) International application number: PCT/JP2020/028190
(87) International publication number: WO 2021/039210

(56) References cited:
- WO-A1-2019/049404
- JP-A- 2009 006 415
- JP-A- 2011 216 007
- JP-A- 2016 224 540
- JP-A- 2018 092 393
- JP-A- H1 029 556
- US-A1- 2016 124 434
- US-A1- 2016 139 591
- US-B1- 10 133 276
- THOMAS G SUGAR ET AL: "Control of Cooperating Mobile Manipulators", IEEE TRANSACTIONS ON ROBOTICS AND AUTOMATION, IEEE INC, NEW YORK, US, vol. 18, no. 1, 1 February 2002 (2002-02-01), XP011053678, ISSN: 1042-296X
- ATSUSHI YAMASHITA ET AL: "Motion Planning of Multiple Mobile Robots for Cooperative Manipulation and Transportation", IEEE TRANSACTIONS ON ROBOTICS AND AUTOMATION, IEEE INC, NEW YORK, US, vol. 19, no. 2, 1 April 2003 (2003-04-01), pages 223 - 237, XP011079616, ISSN: 1042-296X

## Description

### BACKGROUND

### Technical Field

The present invention relates to a transport system, a control apparatus, a transport method, and a program.

### Background Art

At production sites such as factories, it is needed to move articles such as parts and materials used. It is also necessary to move articles in distribution warehouses. Transport robots (Automated Guided Vehicles (AGVs)) are used to move these articles.

Here, regarding movements of articles in factories and the like, transport destinations of articles are predetermined, and types of articles (materials) to be handled are not so many. Thus, the transport robots are only required to transport a limited variety of articles through fixed routes.

Due to such circumstances, in factories and the like, for example, magnetic tapes or QR codes (registered trademark) are attached to a floor, and transport robots that move by relying on the magnetic tapes or the like are often used. Alternatively, in recent years, transport robots called Simultaneous Localization and Mapping (SLAM), which estimate their own positions and move to destinations, are also used.

JP 2015-099524 A discloses robots that transport an article on top of two robots. JP 2009-006415 A discloses robots that transport an article together with a cart on which the article is loaded.

WO2019/049404 discloses a conveyance system which includes a movement plan management unit for managing the movement plan information of a plurality of conveyance devices. At least one of the plurality of conveyance devices has a first communication unit that receives movement plan information from the movement plan management unit. The conveyance device has a drive unit, a conveyance device state information acquisition unit that acquires conveyance device state information, a second communication unit that transmits and receives the conveyance device state information, the movement plan information, and function assignment information, and a function control unit that controls execution of an assigned function on the basis of the function assignment information. At least one of the plurality of conveyance devices has a function assignment unit that performs assignment of functions to be executed to generate the function assignment information on the basis of the movement plan information and the conveyance device state information.

US2016/139591 discloses a control process for a conveyor system for conveying pallets or other objects comprises at least two mutually separate free-moving, i.e. not rail-mounted, conveyor units. Of the at least two conveyor units, a first conveyor unit is assigned a superordinate status and a second conveyor unit is assigned a subordinate status. The second conveyor unit therefore follows the first conveyor unit. To this end, the second conveyor unit detects a shift in the mutual relative position of the two conveyor units with the aid of a sensor and modifies its driving parameters depending on the shift in position detected by the sensor.

Transport robots using magnetic tapes and the like or SLAM type transport robots described above are suitable for transporting articles in factories and the like, but are unsuitable for shipping articles in distribution warehouses and the like.

In distribution warehouses, transport destinations of articles are different depending on the shippers (clients), and it is difficult to use transport robots that use magnetic tapes or QR codes (registered trademark) that cannot flexibly change the routes. In other words, in order to meet the demands of the shippers, it is necessary to frequently reattach magnetic tapes or the like, which is not realistic. QR codes (registered trademark) and the like attached to the floors become dirty due to movements of carts and the like, and it becomes difficult for transport robots to read the QR codes (registered trademark) with the passage of time. Alternatively, in rental warehouses, it may be prohibited to attach magnetic tapes or the like to the floors or the like.

In distribution warehouses, unlike factories and the like, the surrounding environments of transport robots often changes frequently. For example, obstacles may be placed on the passages and block the routes of the transport robots. As described above, the existing transport robots are often unsuitable for transporting articles in distribution warehouses.

In factories and the like, articles to be handled by transport robots are predetermined, and transport modes according to the articles can be selected. For example, a method suitable for the articles is selected from a mode in which transport robots act as carts to load and transport articles on the robots, a mode in which transport robots pull and transport carts with towing equipment, and a mode of lifting up and transporting the entire carts. Alternatively, in large-scale factories or the like, articles may be transported by belt conveyors.

However, because distribution warehouses handle articles to be delivered to consumers by electronic commerce (e-commerce) or articles traded between individuals such as auctions, the types of articles to be handled by the transport robots are enormous, and their shapes and the like cannot be assumed in advance. Thus, with the type of robot that load on carts, it is necessary to prepare a large number of robots for each size of the articles.

In distribution warehouses, articles (load) are often carried on carts and carried into the warehouses, and with the type of robot that loads articles on carts, it is necessary for the operators to reload the load. With the type of towing robot, it is necessary for the operators to connect the towing equipment and the transport robot. In addition, the transport of articles by carry-in robots or belt conveyors that lift up the entire carts is suitable for large-scale factories or the like, but is not suitable for distribution warehouses, especially small-scale distribution warehouses.

As described above, distribution warehouses have different circumstances from factories, such that load is carried in by carts, and the carts and packing styles are different for each shipper (client). Thus, there are many problems in using existing transport robots for article transport in distribution warehouses.

Such problems caused by the circumstances of distribution warehouses cannot be solved by applying the techniques disclosed in JP 2015-099524 and JP 2009-006415 A.

JP 2015-099524discloses a technique in which a slave robot cooperates with a master robot to carry an object. However, the robots disclosed in JP 2015-099524do not operate in consideration of the surrounding environments. Thus, there arise problems that obstacles and the like existing around the carry-in robots are not detected, and the robots collide with the obstacles and the like.

JP 2009-006415 A discloses a transport robot that grips a handle of a cart and pushes the cart to move. The robot disclosed in the document enables the transport of articles by controlling a predetermined point of the cart and a reference point of the robot to be in the same trajectory. Although the robot is equipped with an obstacle sensor, because the movement route is not determined based on the obstacle information obtained from the sensor, the robot may get stuck in a case where an obstacle exists on the route.

A main example object of the present invention is to provide a transport system, a control apparatus, a transport method, and a program that contribute to smoothly transporting a wide variety of articles.

### SUMMARY OF THE INVENTION

The invention is defined in the independent claims to which reference should now be made. Advantageous features are set out in the dependent claims.

According to a first example aspect of the present invention, there is provided a transport system including: first and second transport robots configured to transport an article; a generation apparatus configured to generate position information for the first transport robot and position information for the second transport robot; and a control apparatus configured to transmit, to the first and second transport robots, control information for transporting the article with the first and second transport robots, based on the position information for the first transport robot and the position information for the second transport robot, wherein the control apparatus is configured to transmit control information for the first and second transport robots to face each other and to hold and transport the article.

According to a second example aspect of the present invention, there is provided a control apparatus connected to first and second transport robots configured to transport an article and a generation apparatus configured to generate position information for the first transport robot and position information for the second transport robot, wherein the control apparatus transmits, to the first and second transport robots, control information for transporting the article with the first and second transport robots, based on the position information for the first transport robot and the position information for the second transport robot, wherein the control apparatus is configured to transmit control information for the first and second transport robots to face each other and to hold and transport the article.

According to a third example aspect of the present invention, there is provided is a transport method in which a transport system includes first and second transport robots configured to transport an article, wherein the transport method includes: generating position information for the first transport robot and position information for the second transport robot; and transmitting, to the first and second transport robots, control information for transporting the article with the first and second transport robots, based on the position information for the first transport robot and the position information for the second transport robot, wherein the control apparatus is configured to transmit control information for the first and second transport robots to face each other and to hold and transport the article.

According to each example aspect of the present invention, a transport system, a control apparatus, and a transport method that contribute to smoothly transporting a wide variety of articles are provided. Note that, according to the present invention, instead of or together with the above effects, other effects may be exerted.

### BRIEF DESCRIPTION OF THE DRAWINGS

Fig. 1 is a diagram for describing an overview of an example embodiment;
Fig. 2 is a sequence diagram illustrating an example of operation of a transport system according to the example embodiment;
Fig. 3 is a diagram illustrating an example of a schematic configuration of a transport system according to a first example embodiment;
Fig. 4 is a diagram illustrating an example of a processing configuration of a transport robot according to the first example embodiment;
Fig. 5 is a diagram illustrating an example of a processing configuration of a position information management apparatus according to the first example embodiment;
Fig. 6 is a diagram illustrating an example of information in which the identifiers of camera apparatuses and the areas captured by the camera apparatuses are associated with each other;
Fig. 7 is a diagram for describing operation of an object body position information generation section;
Fig. 8 is a diagram illustrating an example of object body position information transmitted from the position information management apparatus;
Fig. 9 is a diagram illustrating an example of a processing configuration of a transport planning apparatus according to the first example embodiment;
Fig. 10 is a diagram illustrating an example of a screen displayed by a transport plan information generation section;
Fig. 11 is a diagram illustrating an example of a processing configuration (processing modules) of a control apparatus according to the first example embodiment;
Fig. 12 is a diagram illustrating an example of a field configuration;
Fig. 13 is a diagram illustrating an example of field configuration information;
Fig. 14 is a diagram illustrating an example of link configuration information;
Fig. 15 is a diagram illustrating an example of field management information;
Fig. 16 is a diagram illustrating an example of robot management information;
Fig. 17 is a diagram for describing recalculation by a route calculation section;
Fig. 18 is a diagram for describing recalculation by the route calculation section;
Fig. 19 is a sequence diagram illustrating an example of operation of the transport system according to the first example embodiment; and
Fig. 20 is a diagram illustrating an example of a hardware configuration of the control apparatus.

### DESCRIPTION OF THE EXAMPLE EMBODIMENTS

First of all, an overview of an example embodiment will be described. Note that reference signs in the drawings provided in the overview are for the sake of convenience for each element as an example to promote better understanding, and description of the overview is not to impose any limitations. Note that, in the Specification and drawings, elements to which similar descriptions are applicable are denoted by the same reference signs, and overlapping descriptions may hence be omitted.

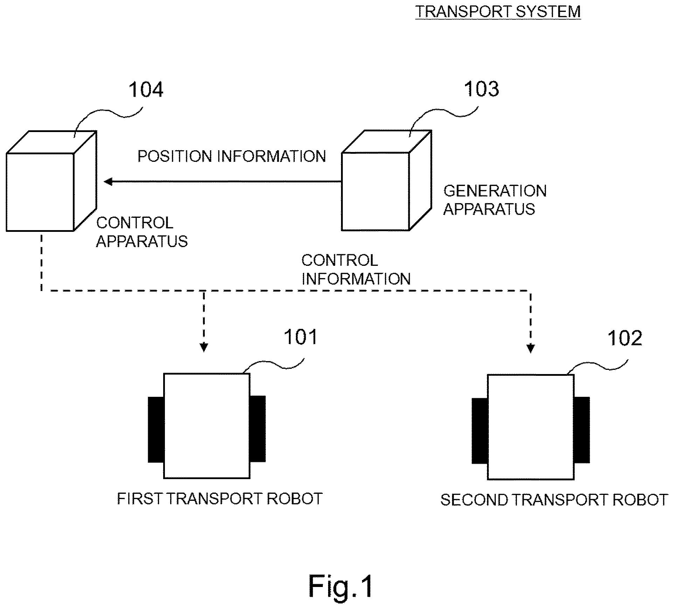

The transport system according to one example embodiment includes a first transport robot 101, a second transport robot 102, a generation apparatus 103, and a control apparatus 104 (see Fig. 1). The first transport robot 101 and the second transport robot 102 transports an article. The generation apparatus 103 generates position information for the first transport robot 101 and position information for the second transport robot 102. The control apparatus 104 transmits, to the first transport robot 101 and the second transport robot 102, control information for transporting the article with the first transport robot 101 and the second transport robot 102, based on the position information for the first transport robot 101 and the position information for the second transport robot 102.

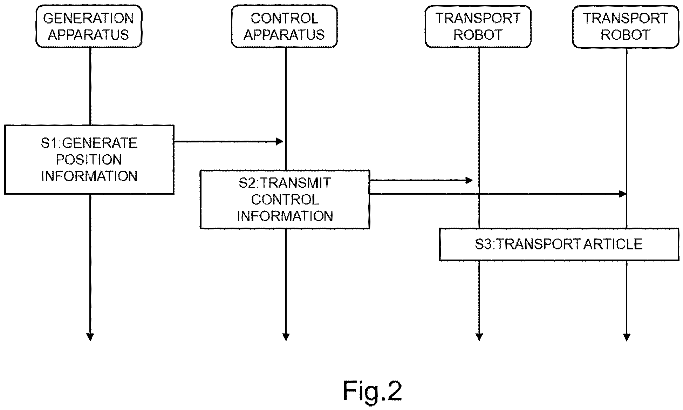

Fig. 2 summarizes operations of the transport system according to the example embodiment. The generation apparatus 103 generates position information for the first transport robot 101 and position information for the second transport robot 102 (step S 1). The control apparatus 104 transmits, to the first transport robot 101 and the second transport robot 102, control information for transporting the article with the first transport robot 101 and the second transport robot 102, based on the position information (step S2). The first transport robot 101 and the second transport robot 102 transport the article based on the received control information (step S3).

In the transport system, two transport robots cooperate to move (transport) an article. Thus, the transport system can be applied to a wide variety of articles carried into distribution warehouses and the like. For example, by two transport robots holding an article and moving, the two transport robots can transport the article regardless of the shape of the article or the like. The control apparatus 104 can control these transport robots in consideration of not only the situations of the two transport robots but also the surrounding environments and the like. Thus, for example, even if obstacles or the like exist around the transport robots (on the route of the transport robots), the control apparatus 104 can execute control to avoid the obstacles.

Specific example embodiments will be described below in further detail with reference to the drawings.

### [First Example Embodiment]

The first example embodiment will be described in further detail with reference to the drawings.

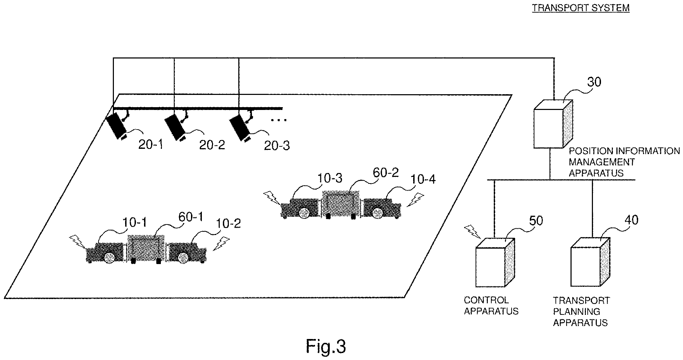

Fig. 3 is a diagram illustrating an example of a schematic configuration of a transport system according to the first example embodiment. With reference to Fig. 3, the transport system includes a plurality of transport robots 10-1 to 10-4, a plurality of camera apparatuses 20-1 to 20-3, a position information management apparatus 30, a transport planning apparatus 40, and a control apparatus 50.

In the following description, in a case where there is no particular reason for distinguishing the transport robots 10-1 to 10-4, they are simply referred to as "transport robots 10". Other configurations are also described in similar ways. The configuration illustrated in Fig. 3 is an example, and is not to limit the number of transport robots 10 and the like included in the transport system.

The transport robots 10 are cooperative transport robots that transport the articles 60 in cooperation with other robots. Specifically, transport robots 10 hold an article 60 from opposing directions and move in the holding state to transport the article 60. The transport robots 10 are configured to be able to communicate with the control apparatus 50, and move based on control commands (control information) from the control apparatus 50.

Note that the articles 60 are fixed to carts with wheels. Thus, when two transport robots 10 lightly hold an article 60 and move, the article 60 also moves.

The transport robots 10 can move independently, and make pairs with arbitrary transport robots 10 to transport articles 60. For example, in the example of Fig. 3, the transport robot 10-1 and the transport robot 10-2 make a pair, and the transport robot 10-3 and the transport robot 10-4 make a pair. However, the transport robot 10-1 and the transport robot 10-3 may be paired to transport an article 60. Note that, in the following description, a pair consisting of two transport robots 10 will be referred to as a transport robot pair.

Transport robots 10 that are not transporting articles 60 (transport robots 10 that are not making pairs with other transport robots 10) wait at a predetermined position in a field. Although Fig. 3 illustrates pairs of transport robots that are transporting articles 60, there are also transport robots 10 that are waiting at a predetermined position in the field (not illustrated in Fig. 3).

The camera apparatuses 20 are apparatuses that capture the inside of the field. Each of the camera apparatuses 20 includes, for example, a depth camera, a stereo camera, and the like. The depth camera is a camera capable of capturing a depth image in which each pixel value of the image indicates the distance from the camera to an object. The stereo camera is a camera that enables measurement related to the depth direction (height direction) of the object by capturing the object from a plurality of different directions by using two cameras.

The camera apparatuses 20 are installed on ceilings, pillars, or the like. Each camera apparatus 20 is placed such that the inside of the field can be overlooked when pieces of the image data captured by all the camera apparatuses 20 are integrated.

Each camera apparatus 20 is connected to the position information management apparatus 30. The camera apparatuses 20 capture the inside of the field at a predetermined interval (predetermined sampling cycle), and transmit the image data to the position information management apparatus 30. The camera apparatuses 20 capture the situations in the field in real time and transmit the image data including the situations to the position information management apparatus 30.

The position information management apparatus 30 is an apparatus that performs management related to the positions of the object bodies in the field (for example, a factory or a distribution warehouse). The position information management apparatus 30 identifies object bodies located in the field based on the image data received from the camera apparatuses 20, and also generates position information of the object bodies. For example, in the example of Fig. 3, the position information management apparatus 30 generates the position information of the transport robot 10-1 and the position information of the transport robot 10-2.

The position information management apparatus 30 analyzes the image data obtained from the camera apparatuses 20 including the depth cameras and the like to identify object bodies in the field (for example, transport robots 10, articles 60, other obstacles placed in the field, and the like). Note that, in the disclosure of the present application, object bodies that do not exist in the initial state of the field are treated as "obstacles".

The position information management apparatus 30 generates position information related to object bodies in the field. The position information management apparatus 30 calculates the positions (absolute positions) of the objects in a three-dimensional coordinate system (X-axis, Y-axis, and Z-axis) having an arbitrary point (for example, an entrance/exit) in the field as an origin. The position information management apparatus 30 transmits the calculated position information of the object bodies (hereinafter referred to as object body position information) to the control apparatus 50.

The transport planning apparatus 40 is an apparatus that generates article transport plan information including information related to transport source and transport destination of articles 60 transported by transport robot pairs. Specifically, the transport planning apparatus 40 identifies the articles 60 to be transported by the operator, and provides operation screens (Graphical User Interface (GUI)) for inputting the transport source and the transport destination of the articles 60. The transport planning apparatus 40 generates article transport plan information, based on the information input by the GUI. The transport planning apparatus 40 transmits the generated article transport plan information to the control apparatus 50.

The control apparatus 50 controls the transport robots 10 by using the object body position information obtained from the position information management apparatus 30 and the article transport plan information obtained from the transport planning apparatus 40. When the control apparatus 50 obtains the transport plan information, the control apparatus 50 selects two transport robots 10 from the transport robots 10 waiting in the field. The control apparatus 50 instructs the two selected transport robots 10 to move toward the transport source described in the transport plan information. Specifically, the control apparatus 50 transmits control commands (control information) to the two transport robots 10 and remotely controls these robots so as to move toward the transport source.

Each of the two transport robots 10 moves based on the control commands from the control apparatus 50, and when the contact with the article 60 is detected by the contact sensor or the like, the "article holding completion notification" is transmitted to the control apparatus 50. Note that, depending on a control method of the control apparatus 50, it is not necessary to transmit the article holding completion notification from the transport robots 10. For example, the control apparatus 50 may consider that the two transport robots 10 hold the object body (article 60) after a predetermined time (for example, 30 seconds) has elapsed since each of the two transport robots 10 has moved to a predetermined position. In other words, the control apparatus 50 may transmit a control command (control information) after the predetermined time has elapsed.

When the control apparatus 50 obtains the article holding notification from each transport robot 10, the control apparatus 50 transmits a control command to each of the two transport robots 10 to remotely control the transport robot pair to move to the transport destination described in the article transport plan. At that time, the control apparatus 50 performs remote control such that the transport robot pair moves to the transport destination while holding the article 60. For example, the control apparatus 50 transmits the control commands (control information) such that the two transport robots 10 move while keeping the distance between the two transport robots 10 facing each other.

Subsequently, the details of each apparatus included in the transport system will be described.

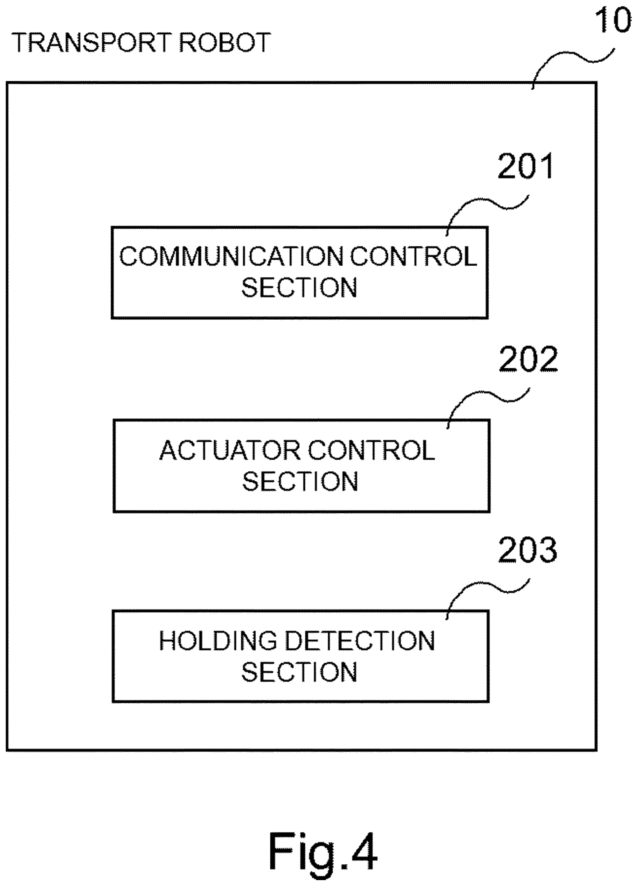

Fig. 4 is a diagram illustrating an example of a processing configuration (processing modules) of the transport robot 10 according to the first example embodiment. With reference to Fig 4, the transport robot 10 includes a communication control section 201, an actuator control section 202, and a holding detection section 203.

The communication control section 201 is means for controlling communication with the control apparatus 50. The communication control section 201 communicates with the control apparatus 50 by using a wireless communication means such as a wireless Local Area Network (LAN), Long Term Evolution (LTE), or a network used in a specific area such as local 5G.

The actuator control section 202 is means for controlling an actuator composed of a motor or the like, based on a control command (control information) received from the control apparatus 50. For example, the control apparatus 50 transmits the control command including start of rotation of the motor, rotation speed of the motor, stop of rotation of the motor, and the like to the transport robot 10. The actuator control section 202 controls the motor and the like according to the control command.

The holding detection section 203 is means for detecting that an article 60 is held with another transport robot 10 making a pair. The transport robot 10 is installed with a "contact sensor" on the surface for holding the article. The holding detection section 203 monitors output of the contact sensor and determines whether or not the sensor has detected contact with an object body. In a case where the contact with the object body (article 60) is detected, the holding detection section 203 transmits an "article holding completion notification" to the control apparatus 50 via the communication control section 201.

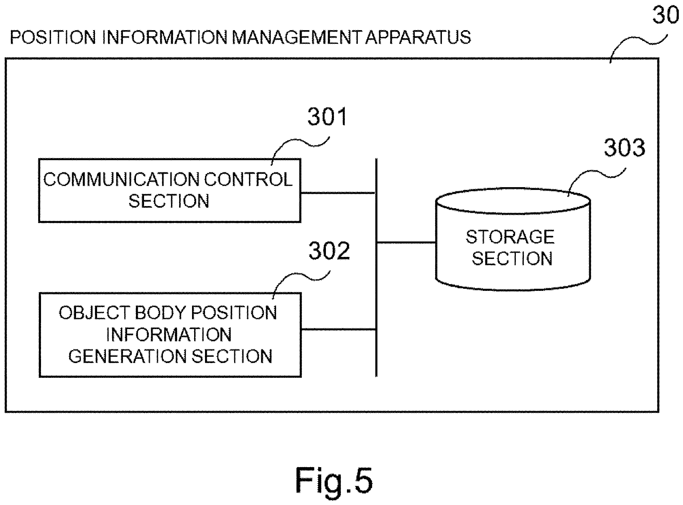

Fig. 5 is a diagram illustrating an example of a processing configuration (processing modules) of the position information management apparatus 30 according to the first example embodiment. With reference to Fig. 5, the position information management apparatus 30 includes a communication control section 301, an object body position information generation section 302, and a storage section 303.

The communication control section 301 is means for controlling communication with other apparatuses (for example, the camera apparatuses 20 or the control apparatus 50) connected by wire (for example, LAN, optical fiber, or the like) or wirelessly.

The object body position information generation section 302 is means for generating the object body position information described above. The object body position information generation section 302 generates the object body position information based on the image data obtained from the camera apparatuses 20.

Each of the camera apparatuses 20 transmit the image data to the position information management apparatus 30 together with the own identifier (ID). The camera apparatus 20 that is the transmission source of the image data is identified from the identifier of the camera apparatus 20. Because the camera apparatus 20 is fixed to the ceiling or the like, the camera apparatus 20 continuously transmit image data of predetermined area in the field to the position information management apparatus 30.

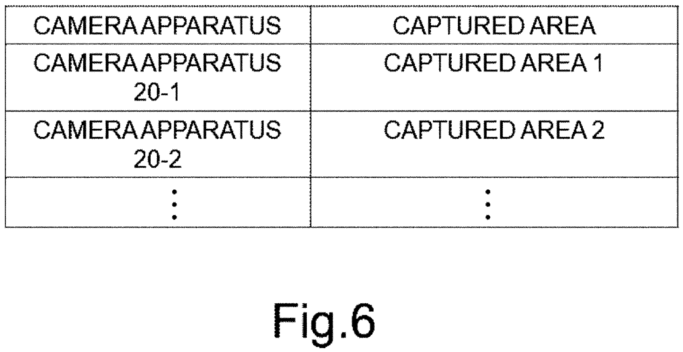

The object body position information generation section 302 detects object bodies by, for example, the following method. The storage section 303 stores information in which the identifier of each camera apparatus 20 and the area captured by the camera apparatus 20 are associated with each other (see Fig. 6). By referring to the associated information, the object body position information generation section 302 can grasp which area in the field obtained image data corresponds to.

The storage section 303 stores initial image data of the area captured by each camera apparatus 20. The initial image data is image data in which object bodies that do not exist in the initial state are not imaged in the field. The object body position information generation section 302 compares the obtained image data with the corresponding initial image data, and when difference is found, determines that the image data includes an object body to be detected. Note that the object body to be detected by the object body position information generation section 302 includes a transport robot 10, an article 60, an obstacle placed in a passage of the field, and the like.

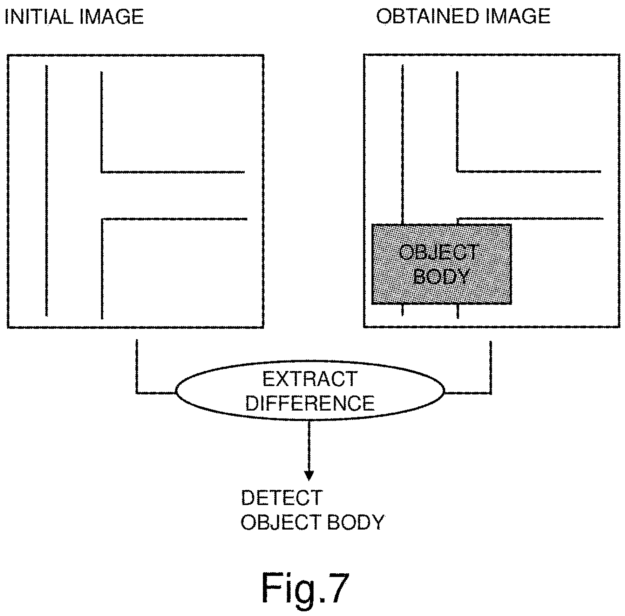

For example, the storage section 303 stores initial images as illustrated on the left side of Fig. 7. The image illustrated on the right side of Fig. 7 is an image obtained from the camera apparatus 20. The object body position information generation section 302 calculates the difference between the two pieces of image data and detects the object body included in the obtained image on the right side. Note that, in a case where the initial state in the field is changed, the initial image data stored in the storage section 303 is updated. For example, the initial image data is updated in a case where the layout of the factory or the like is changed.

Note that the object body discrimination by the object body position information generation section 302 is not limited to the method using the initial image data. For example, the object body position information generation section 302 may calculate the coordinates of object bodies (obstacles) and detect that object bodies exist on the passage (on the link) based on the coordinates of the object bodies and the normal coordinate information of the field.

When the object body position information generation section 302 detects an object body, the object body position information generation section 302 approximates the object body to, for example, a rectangular shape, and calculates the coordinates of the four points. Specifically, the object body position information generation section 302 calculates the relative coordinates (X coordinate and Y coordinate) of the object body with respect to the absolute coordinates of the reference point, based on the number of pixels from the reference point (for example, the lower left of the image) in the image data to the object body. At that time, the object body position information generation section 302 calculates the relative coordinates of the object body, based on the information (resolution of the imaging element or the like) of the camera apparatus 20 from which the image data has been obtained.

The absolute coordinates of the reference point of the obtained image data are known in advance. The object body position information generation section 302 calculates the absolute coordinates (X and Y coordinates) of the object body in the field by adding the calculated relative coordinates of the object body to the absolute coordinates of the reference point. In addition, in a case where the image data is captured by a depth camera, the object body position information generation section 302 reads out a pixel value corresponding to the calculated X and Y coordinates to obtain the Z coordinate (height) of the object body.

The object body position information generation section 302 calculates the absolute positions of the four points forming the object body by executing such processing for the four corners of the object body.

Next, the object body position information generation section 302 determines the type of the object body included in the obtained image. The object body position information generation section 302 calculates the size of the detected object body from the absolute coordinates of the four points. The object body position information generation section 302 may determine the type of the object body, based on the calculated size. For example, because the sizes of the transport robots 10 are known in advance, when the size of the object body and the size of a transport robot 10 match, the object body position information generation section 302 determines that the detected object body is the transport robot 10. On the other hand, in a case where the size of the detected object body and the sizes of the transport robots 10 do not match, the object body position information generation section 302 determines that the detected object body is an obstacle.

Note that the method of determining whether or not the object body is a transport robot, based on the size of the object body is an example, and other directions can be used. For example, markers having identification functions such as QR codes (registered trademark) or Augmented Reality (AR) markers may be attached to the transport robots 10, and the object body position information generation section 302 may detect the transport robots 10 by reading the markers. In the first example embodiment, the description is made assuming that a marker is attached to the transport robot 10, and that a detected object body is a transport robot 10 and that the identification of the transport robot 10 is possible. Alternatively, the identification of the transport robots 10 may be performed by the object body position information generation section 302 transmitting specific signals or messages to the transport robots 10, and the transport robots 10 that receive the signals or the like responding with the identification numbers or the like. In other words, the object body position information generation section 302 can perform the identification of the transport robots 10 by signals or the like from the transport robots 10 without assigning identification information (for example, characters or patterns) on the outsides of the transport robots 10.

The object body position information generation section 302 may determine an object body held between two transport robots 10 as an article 60.

The object body position information generation section 302 transmits types of detected object bodies (transport robots 10, obstacles, or the like) and their absolute positions to the control apparatus 50. Note that the absolute position of the object body may be the calculated absolute coordinates of the four points forming the object body, or may be the absolute coordinates of one point representing the object body (for example, the center of the object body).

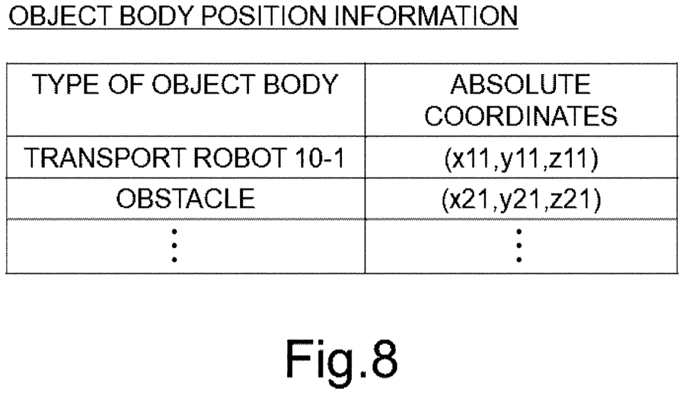

Fig. 8 is a diagram illustrating an example of the object body position information transmitted from the position information management apparatus 30. Note that, as illustrated in Fig. 8, in a case where a plurality of object bodies are detected from the image data, the object body position information related to these object bodies may be collectively transmitted to the control apparatus 50. As described above, the position information management apparatus 30 generates the position information of object bodies including the transport robots 10 and transmits the generated position information to the control apparatus 50.

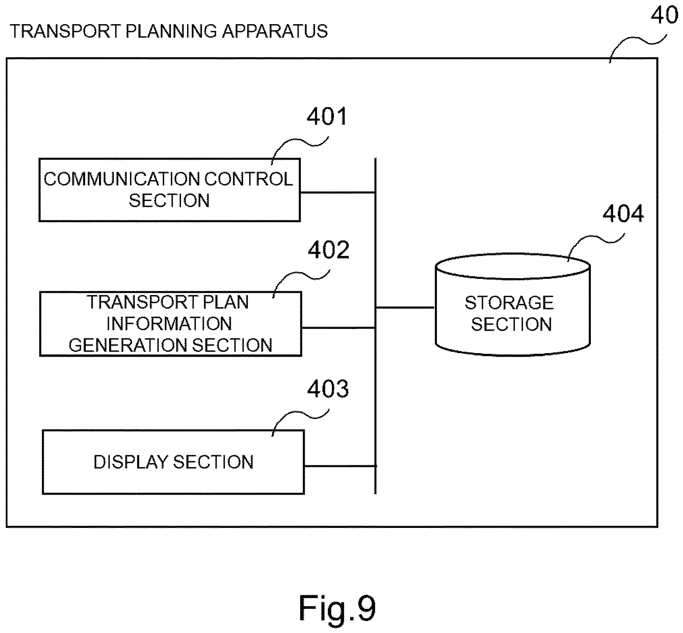

Fig. 9 is a diagram illustrating an example of a processing configuration (processing modules) of the transport planning apparatus 40 according to the first example embodiment. With reference to Fig. 9, the transport planning apparatus 40 includes a communication control section 401, a transport plan information generation section 402, a display section 403, and a storage section 404.

The communication control section 401 is means for controlling communication with other apparatuses, similarly to the communication control section 301 of the position information management apparatus 30.

The transport plan information generation section 402 is means for generating the above-mentioned article transport plan information. The transport plan information generation section 402 identifies the articles 60 to be transported by the operators, and generates information related to the GUI for inputting the transport sources or the transport destinations of the articles 60. The transport plan information generation section 402 delivers the generated GUI information to the display section 403. The display section 403 displays the GUI information on a liquid crystal display or the like. Alternatively, the transport plan information generation section 402 may generate information for displaying GUIs on a terminal used by an operator, and transmit the generated information to the terminal.

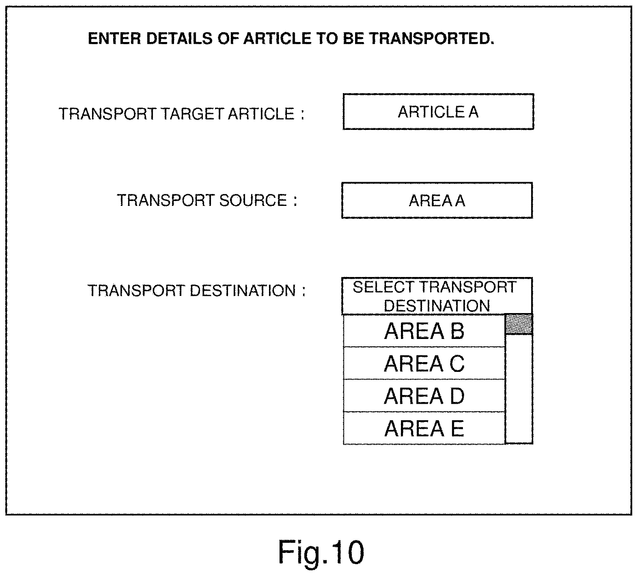

The transport plan information generation section 402 displays, for example, a screen as illustrated in Fig. 10. The transport plan information generation section 402 transmits the information input by the operator in accordance with the screen as illustrated in Fig. 10 to the control apparatus 50. Specifically, the transport plan information generation section 402 associates information for identifying the article 60 to be transported (for example, the article name, the serial number, or the like), the place where the article 60 is placed (transport source), and the transport destination of the article 60 with each other, and transmits the information to the control apparatus 50 as article transport plan information.

Note that, as illustrated in Fig. 10, in a case where the transport destination or the like is exchanged between the transport planning apparatus 40 and the control apparatus 50 by using the name in the field or the like, the absolute coordinates of the name in the field are shared in advance by the transport planning apparatus 40 and the control apparatus 50. Alternatively, the transport plan information generation section 402 may convert the name in the field input by the operator into the absolute coordinates in the field, and transmit the converted absolute coordinates to the control apparatus 50.

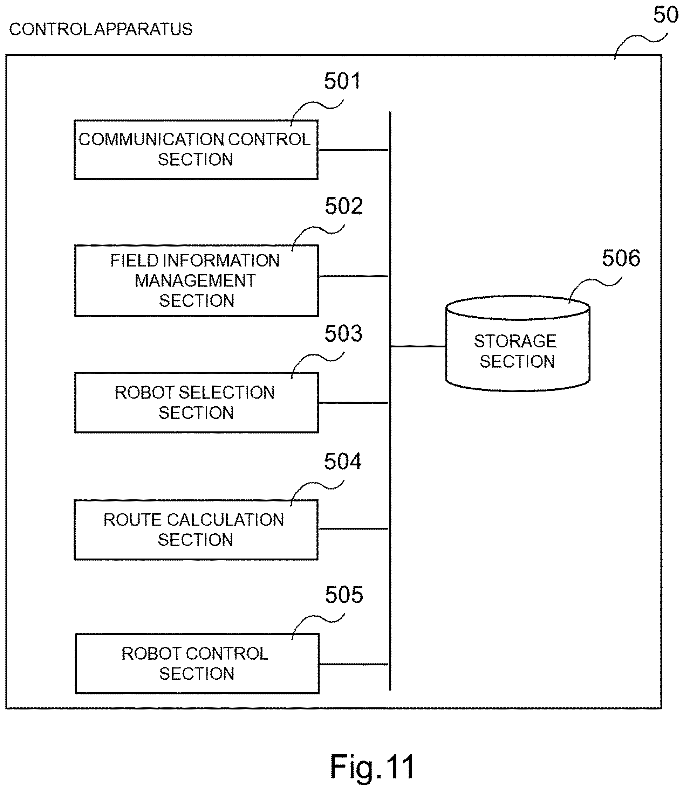

Fig. 11 is a diagram illustrating an example of a processing configuration (processing modules) of the control apparatus 50 according to the first example embodiment. With reference to Fig. 11, the control apparatus 50 includes a communication control section 501, a field information management section 502, a robot selection section 503, a route calculation section 504, a robot control section 505, and a storage section 506.

The communication control section 501 controls communication with other apparatuses, similarly to the communication control section 401 of the transport planning apparatus 40 and the like. In a case where the communication control section 501 obtains object body position information from the position information management apparatus 30, and obtains article transport plan information from the transport planning apparatus 40, the communication control section 501 stores these pieces of information in the storage section 506.

The field information management section 502 is means for managing map information, link information, and the like of the field.

The storage section 506 stores field configuration information indicating the configuration of the field. Here, in the disclosure of the present application, start points, end points, branch points, and the like of passages through which transport robots 10 can pass are regarded as nodes. The field configuration information defines the absolute coordinates of the nodes.

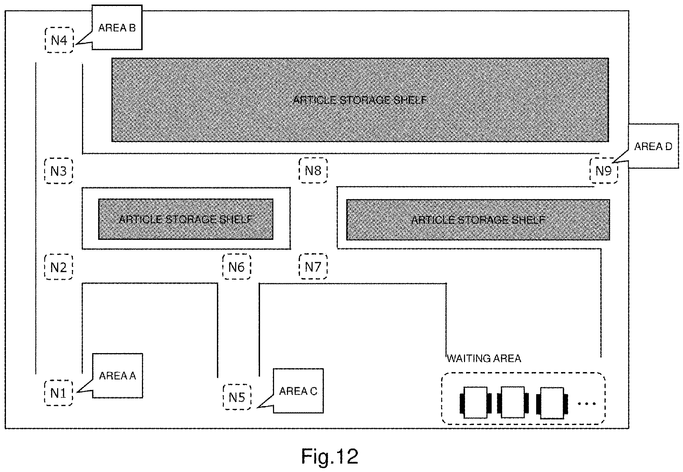

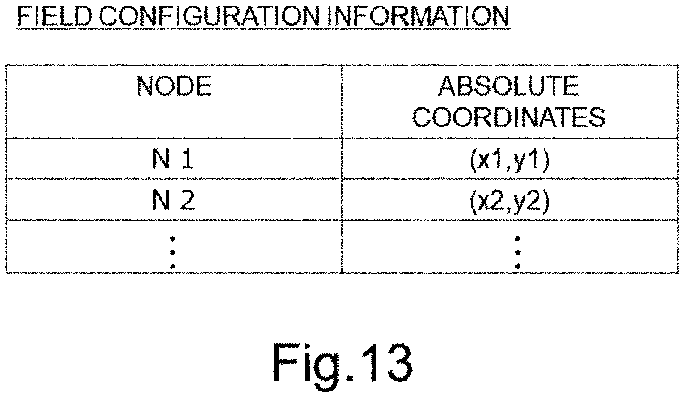

For example, suppose that the field configuration is as illustrated in Fig. 12. In this case, the absolute coordinates of the node N1 and the node N2 are defined by the field configuration information (see Fig. 13).

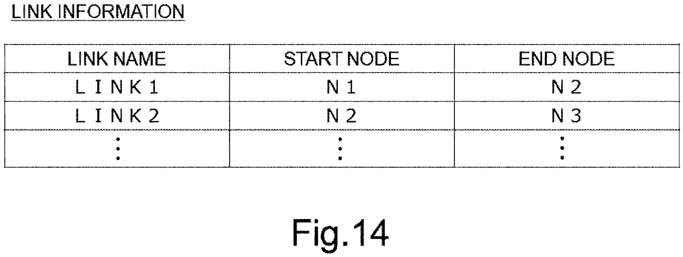

The storage section 506 stores link information indicating the connection relationships of the nodes. For example, in the example of Fig. 12, the link information as illustrated in Fig. 14 is stored.

The storage section 506 stores field management information for managing the current situations of the field. The field management information includes, for each link, the distance of the link, the existence/non-existence of transport robots 10, and the existence/non-existence of obstacles.

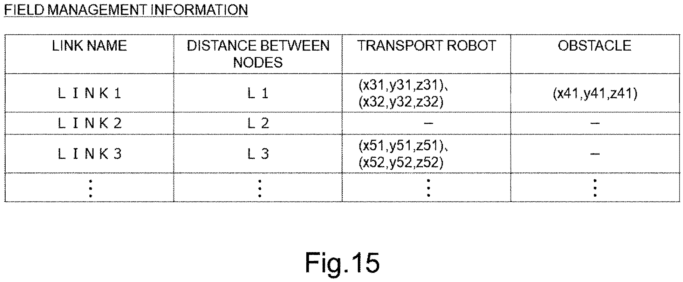

Fig. 15 is a diagram illustrating an example of field management information. As illustrated in Fig. 15, when transport robots 10 exist on the passages indicated by the links, the absolute coordinates of the transport robots 10 are written in the transport robot field. Similarly, when obstacles exist on the passages, the absolute coordinates of the obstacles are written in the obstacle field. Note that the initial values of the transport robot field and the obstacle field are "no transport robot" and "no obstacle". Because the field configuration is predetermined, the distances between the nodes constituting each link can also be calculated in advance. The distances between the nodes are calculated before operating the system and written in the field management information.

The field information management section 502 updates the field management information, based on the object body position information received from the position information management apparatus 30. Specifically, the field information management section 502 identifies the types of object bodies (transport robots, obstacles) included in the obtained object body position information. The field information management section 502 refers to the field configuration information and the link configuration information stored in the storage section 506, and identifies the links on which the identified object bodies exist. The field information management section 502 updates the transport robot field and the obstacle field corresponding to the identified links based on the types of the identified object bodies (transport robots, obstacles) and their absolute coordinates.

For example, in the example of Fig. 12, when obstacles are placed on the link consisting of the node N2 and the node N6, the absolute coordinates of the obstacles are set in the obstacle field of the link.

The field information management section 502 performs the update of the field management information every time object body position information is obtained from the position information management apparatus 30. Thus, by referring to the field management information, the current situations in the field can be grasped. When obstacles are placed in the field, the existence of the obstacles can be immediately found by referring to the field management information. The positions of the transport robots 10 operating in the field are also found from the field management information.

The field information management section 502 updates the current position field of robot management information described later, based on the absolute coordinates of the transport robots 10 read from the object body position information.

The robot selection section 503 is means for selecting transport robots 10 for transporting articles 60. Specifically, when the robot selection section 503 obtains article transport plan information from the transport planning apparatus 40, the robot selection section 503 selects transport robots 10 for transporting articles 60 described in the information. The robot selection section 503 selects two transport robots 10 from a plurality of transport robots 10 waiting in the waiting area.

The robot selection section 503 may select two transport robots 10, based on any criteria. For example, the robot selection section 503 may select transport robots 10 closest to the transport source described in the transport plan information, or may select transport robots 10 in the order of the shortest operating time. Alternatively, in a case where the remaining battery levels can be obtained from the transport robots 10, the robot selection section 503 may select the robots having the largest remaining battery levels in order. Alternatively, the robot selection section 503 may select transport robots 10 with special specifications according to the articles 60. For example, in a case where the articles 60 are extremely heavy, transport robots 10 for transporting heavy objects may be selected, and when the articles 60 are lightweight, transport robots 10 for transporting lightweight objects may be selected.

The robot selection section 503 notifies the route calculation section 504 and the robot control section 505 of the selected transport robots 10 (transport robot pairs). The robot selection section 503 reflects the information related to the selected transport robots 10 in the robot management information. Note that the details of the robot management information will be described later.

The route calculation section 504 is means for calculating a route for transport robot pairs to transport articles 60 from the transport source to the transport destination, based on article transport plan information generated by the transport planning apparatus 40. For example, in a case where "area A" is described as the transport source and "area D" is described as the transport destination in the article transport plan information, the route from the lower left to the middle upper right of Fig. 12 is calculated. Note that the storage section 506 stores the relationships between each area and the corresponding node in association with each other. For example, information that the area B corresponds to the node N4 is stored in the storage section 506.

The route calculation section 504 calculates the route for transporting the articles 60 from the transport source to the transport destination by using route search algorithms such as Dijkstra's algorithm and Bellman-Ford algorithm. For example, in the above example, the route via the nodes N1, N2, N3, N8, and N9 and the route via the nodes N1, N2, N6, N7, and N8 are calculated.

The route calculation section 504 refers to field management information at the time of route calculation. The route calculation section 504, for example, treats each distance between nodes as a cost of a link to calculate the transport route. At that time, the route calculation section 504 determines that the link with an obstacle is impassable, and treats the cost of the link as infinite to calculate the transport route. Note that the route calculation section 504 does not consider the cost for the link with transport robot 10. This is because the transport robot 10 moves with the passage of time.

The route calculation section 504 manages calculated route and transport robots 10 using the route in association with each other. Specifically, the route calculation section 504 updates robot management information stored in the storage section 506.

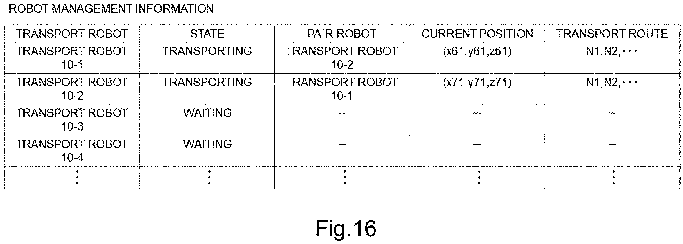

Fig. 16 is a diagram illustrating an example of robot management information. With reference to Fig. 16, identifiers of transport robots 10, the state of each robot (transporting, waiting), information on transport robots 10 to form pairs, the current positions, and information related to routes used by the transport robots 10 are managed in association with each other.

As the identifier of each transport robot 10, arbitrary identifiers (IDs) such as Media Access Control (MAC) addresses or names (transport robots No. 1 and No. 2) assigned to each transport robot 10 can be used. Of the pieces of the information illustrated in Fig. 16, the state field is updated by the robot control section 505. The field related to pair robot is updated by the robot selection section 503. The current position field is updated by the field information management section 502. The transport route field is updated by the route calculation section 504.

The robot control section 505 is means for controlling transport robots 10. The robot control section 505 transmits control information for transporting articles 60 by transport robot pairs to each transport robot 10, based on position information of transport robots 10 and position information of other transport robots 10 making pairs with the transport robots 10. In other words, the robot control section 505 controls transport robots 10 by transmitting control commands (control information) to the transport robots 10. Note that, when the robot control section 505 transmits control commands to transport robots 10, the robot control section 505 may transmit all the control commands at once such that transport robot pairs can move from transport source to transport destination, or may transmit control commands in order according to the positions of the transport robot pairs and the like.

The robot control section 505 needs information related to the orientations of transport robots 10 when controlling the transport robots 10. In this case, gyroscope sensors or the like are attached to the transport robots 10, and the robot control section 505 may obtain information related to the orientations from the transport robots 10. Alternatively, the orientations when placing the transport robots 10 in the waiting area may be predetermined, and the orientations of the transport robots 10 may be estimated, based on control commands transmitted from the robot control section 505 to the transport robots 10.

When receiving the notification of robot selection from the robot selection section 503, the robot control section 505 controls the selected transport robots 10 to move to the transport source described in the article transport plan. Note that the control related to the initial movement can be the same as the control when transport robots 10 move from transport source to transport destination, which will be described later, and thus the details thereof will be omitted.

When the transport robots 10 move to the transport source, the robot control section 505 confirms whether or not articles 60 are placed at the transport source. Any method can be used for the confirmation. For example, in a case where an operator places the articles 60 at the transport source, the confirmation may be made by the operator pressing a button connected to the control apparatus 50. Alternatively, sensors (infrared sensors, cameras, weight sensors, and the like) may be installed in the area which is the transport source, and the confirmation of articles 60 may be performed by using the sensors. In other words, the robot control section 505 may recognize that articles 60 has been installed at the transport source, based on the output of the sensors.

The robot control section 505 may confirm whether or not the articles 60 placed at the transport source are the articles 60 input by the article transport plan information. For example, consider a case in which a camera is installed near the transport source and a marker (AR marker or the like) for identifying an article 60 is attached to the article 60. In this case, the robot control section 505 may refer to information in which the marker and the article 60 are associated with each other, and confirm that the article 60 placed at the transport source match the article 60 input by the article transport plan information.

Alternatively, the robot control section 505 may determine that the articles 60 that the operator has placed at the transport source are the articles 60 described in the article transport plan information, and may omit the confirmation. In other words, the robot control section 505 may trust the operator and omit the confirmation of the articles 60.

When an article 60 is placed at a transport source, the robot control section 505 controls two transport robots 10 to hold the article 60 by transmitting control commands to the transport robots 10. Specifically, the robot control section 505 moves the two transport robots 10 so as to face each other over the article 60, and moves the robots such that the distance between the robots becomes narrower.

When each of the two transport robots 10 succeeds in holding the article 60, the control apparatus 50 is notified of the article holding completion notification. When the robot control section 505 receives the notification from each of the two transport robots 10, the robot control section 505 starts the transport by the two transport robots 10. Specifically, the robot control section 505 generates a control command such that the transport robot pair holding the article 60 moves on the route calculated as the transport route of the transport robot pair, and transmit the control command to each transport robot 10.

The control of the two transport robots 10 by the robot control section 505 can be realized by the description of Reference 1 below. Details related to the mechanism of the transport robots 10 are also described in the document.

### <Reference Literature 1>

Taichi Kumagai, Shinya Yasuda, Hiroshi Yoshida, "A prototype of a cooperative conveyance system by wireless-networked control of multiple robots", The Institute of Electronics, Information and Communication Engineers, IEICE Technical Report PRM2018-121 CNR2018-44, 2019-02

The robot control section 505 treats one of the two transport robots 10 as a "leading transport robot" and treats the other one as a "following transport robot". Moreover, the robot control section 505 obtains the current position of the leading transport robot 10 of the transport robots 10 described in the robot management information. Next, the robot control section 505 determines the position where the leading transport robot 10 arrives.

In a case of causing the transport robot pair to go straight, the robot control section 505 calculates the time and speed for rotating the motor of each transport robot 10 according to the distance between the current position of the leading transport robot 10 and the calculated arrival position. At that time, the robot control section 505 generates a control command such that the motor rotation speeds of the transport robots 10 are the same.

In a case of rotating the transport robot pair, the robot control section 505 uses a model of circular motion that draws a curve by speed difference between left and right wheels. Specifically, the robot control section 505 calculates input speed to the left and right wheels for arriving at the target position from the current position in a circular orbit, based on the target position and the position and the orientation of the robot. The robot control section 505 uses the calculated input speed as is for the leading transport robot 10, and generates a control command to be transmitted to the leading transport robot 10, based on the calculated input speed. In contrast, for the following transport robot 10, the robot control section 505 calculates a speed correction value in the front-rear direction based on the distance between the robots (the distance between plates over which the transport robots hold the article 60) and an offset correction value of the left and right wheels based on a rotation angle. The robot control section 505 generates a control command to be transmitted to the following transport robot 10, based on these correction values (the speed correction value and the offset correction value).

In a case where the transport robot pair arrives at the transport destination, the robot control section 505 controls the transport robot pair so as to place the article 60 at the transport destination. Specifically, the robot control section 505 completes the transport of the article 60 by controlling the distance between the two transport robots 10 to be longer.

The basic control of the robot control section 505 is as described above.

The control of the robot control section 505 is a control in a case where other transport robots 10 do not exist in the field and no obstacle is placed on the transport route during transport. However, in an actual field, other transport robots 10 may use the transport route, or an obstacle may be placed on the transport route initially calculated.

The robot control section 505 controls two transport robots 10 such that the article 60 is correctly transported to the transport destination even in such a situation.

The robot control section 505 refers to latest field management information and robot management information, and determines whether or not it is necessary to recalculate the transport route related to the transport robots 10 during transport. Specifically, the robot control section 505 refers to latest field management information, and determines whether or not an object body (obstacle or transport robot pairs) exist on the links constituting the transport route of the transport robot pair during transport. In a case where it is determined that the object body exists as a result of the determination, the robot control section 505 instructs the route calculation section 504 to recalculate the transport route with the current position of the transport robot pair as the start node and the transport destination as the end node.

The route calculation section 504 recalculates the transport route in accordance with the instruction. At that time, because the latest link management information describes the absolute coordinates of the object bodies (obstacles or transport robot pairs) in the obstacle field of the links included in the previously calculated transport route, the route calculation section 504 calculates the transport route to the transport destination while avoiding the links with the object bodies. The recalculated transport route is reflected in the transport route field of the robot management information. The robot control section 505 may control the two transport robots 10 based on the reflected transport route.

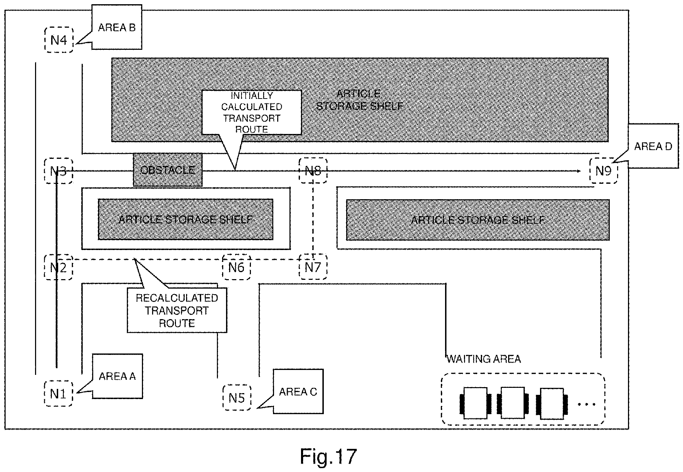

For example, consider a case in which the initially calculated transport route is nodes N1, N2, N3, N8, and N9, as indicated by the solid line in Fig. 17. In this case, the robot control section 505 controls the transport robot pair so as to pass through the route. However, while the transport robot pair is moving between the nodes N1 and N2, an object body (an obstacle is exemplified in Fig. 17) may be placed between the nodes N3 and N8. In this case, the robot control section 505 grasps the existence of the object body from the latest field management information, and instructs the route calculation section 504 to recalculate the transport route. As a result, the route as indicated by the dotted line in Fig. 17 is recalculated. As described above, in a case where an object body (obstacle, transport robot 10) exists on the calculated route, the control apparatus 50 calculates (recalculates) the route for transporting the article 60 in consideration of the existence of the object body.

Alternatively, the control apparatus 50 may change the control according to the type of the object body placed in the field. For example, when the object body existing in the field is an "obstacle", the control apparatus 50 recalculates the route described above. On the other hand, when the object body existing in the field is a "transport robot pair", the control apparatus 50 may recalculate the route according to the distance between the transport robot pairs.

Obstacles placed on the transport route may not be moved in a short time. Thus, when the robot control section 505 detects that an obstacle is placed on the transport route, the robot control section 505 instructs the route calculation section 504 to recalculate the transport route. On the other hand, even if transport robots 10 exist on the transport route, the robots are expected to move in a short time, so that there is a possibility that they will not be obstacles (obstacles that blocks the way) of the transport robot pair during transport.

Thus, in a case where another transport robot pair exists on the transport route, the robot control section 505 instructs the route calculation section 504 to recalculate the transport route when the distance between the two sets of transport robot pairs is short. Specifically, the robot control section 505 refers to the latest field management information, and when transport robots 10 exist on the transport route of the transport robot pair during transport, the robot control section 505 calculates the distance between the current position of the transport robot pair during transport and the transport robots 10 existing on the transport route. The robot control section 505 executes threshold processing for the distance, and instructs the route calculation section 504 to recalculate the transport route according to the result.

When the transport route is recalculated and reflected in the transport route field of the robot management information, the robot control section 505 controls the transport robot pair so as to move on the latest transport route.

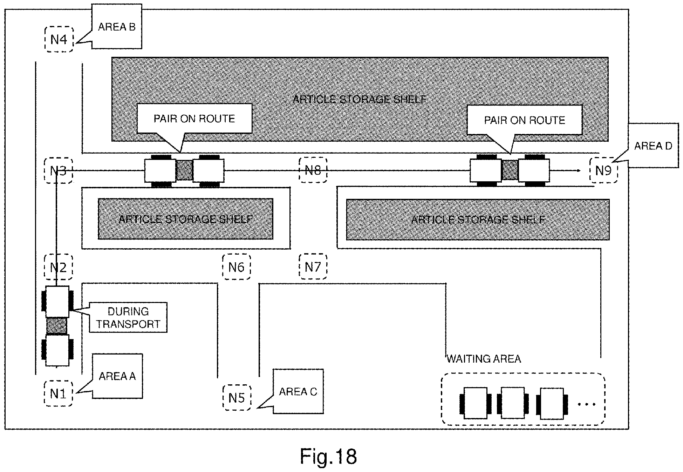

For example, as illustrated in Fig. 18, consider a case in which a pair of two transport robots transports an article 60 from the area A to the area D. At that time, suppose that the transport robot pair during transport is moving between the nodes N1 and N2. Suppose that another transport robot pair is also transporting an article. In this case, in a case where another transport robot pair is moving between the nodes N3 and N8, the transport route is recalculated because the distance between the two sets of transport robot pairs is short. On the other hand, in a case where another transport robot pair is moving between the nodes N8 and N9, the transport route is not recalculated because the distance between the two sets of transport robot pairs is long.

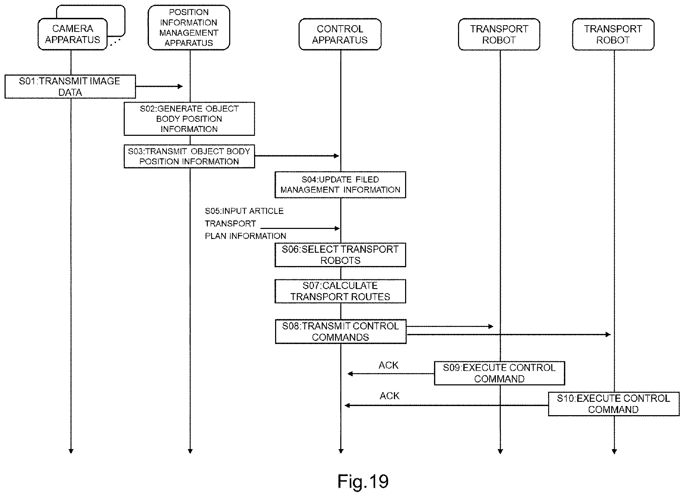

Subsequently, the operation of the transport system according to the first example embodiment will be described. Fig. 19 is a sequence diagram illustrating an example of the operation of the transport system according to the first example embodiment.

The camera apparatuses 20 transmit captured image data to the position information management apparatus 30 (step S01).

The position information management apparatus 30 analyzes the obtained image data and attempts to detect an object body. In a case where the object body is detected from the field, the position information management apparatus 30 generates object body position information (step S02). The position information management apparatus 30 transmits the generated object body position information to the control apparatus 50 (step S03).

The camera apparatuses 20 and the position information management apparatus 30 repeat the operations of steps S01 to S03 in a predetermined cycle. As a result, the control apparatus 50 can grasp the situations in the field in real time.

When the control apparatus 50 obtains the object body position information, the control apparatus 50 updates field management information (step S04).

The control apparatus 50 receives article transport plan information from the transport planning apparatus 40 (step S05).

The control apparatus 50 selects transport robots 10 to transport articles 60 (step S06).

The control apparatus 50 calculates transport routes of transport robot pairs, based on the article transport plan information (step S07).

The control apparatus 50 generates control commands and transmits the control commands to the transport robot pairs such that transport robot pairs move on the calculated transport route (step S08).

Each transport robot 10 receives the control command and executes the control command (steps S09 and S10). When the transport robot 10 executes the control command, the transport robot 10 transmits a positive acknowledgment (ACK, Acknowledgement).

The control apparatus 50 and the transport robot pairs transport the articles 60 to the transport destination by repeating the steps S08 to S09.

As described above, in the transport system according to the first example embodiment, the control apparatus 50 transmits control information for two transport robots 10 to hold and transport an article 60 to the transport robots 10. At that time, the control apparatus 50 calculates a route for transporting the article 60, based on the position information of the object bodies (transport robots 10, obstacles) existing in the field, and transmits control information for transporting the article 60 through the calculated route to the transport robots 10. In other words, in the transport system according to the first example embodiment, position information of transport robots 10 and the like is generated, and the control of the transport robots 10 is performed based on the position information. Thus, magnetic tapes or the like are unnecessary, and the transport robots 10 can be controlled even in an environment (complex environment) in which SLAM does not function.

In addition, in the first example embodiment, two transport robots cooperate to transport articles 60, so the labor of operators reloading the articles 60 is unnecessary, or it is possible to handle a wide variety of shapes of articles 60. In other words, because two transport robots 10 make a pair and move while holding an article 60, movements of articles 60 can be performed regardless of the shapes or the like of the articles 60. Even in a case where articles 60 are loaded on carts, pairs of transport robots 10 can move the articles 60 together with the carts, so that the operators do not need to reload the articles 60. Because two transport robots cooperate to transport (carry) an article 60, it is not necessary to attach towing equipment or the like to the article 60 or the cart.

The control apparatus 50 can be implemented as a cloud server on a network (for example, the Internet or a wireless communication network such as LTE), and realizes coordinated control of transport robots 10 while overlooking the entire field. In addition, because the transport robots 10 are centrally controlled by the control apparatus 50, sensors (expensive sensors) for monitoring the peripheries of the transport robots 10 are unnecessary, and the prices of the transport robots 10 can be reduced.

The transport instruction of the article 60 is generated by the transport planning apparatus 40, and the user can input location information such as an address via the apparatus, so that intuitive, easy-to-understand, and efficient transport of the article 60 is possible.

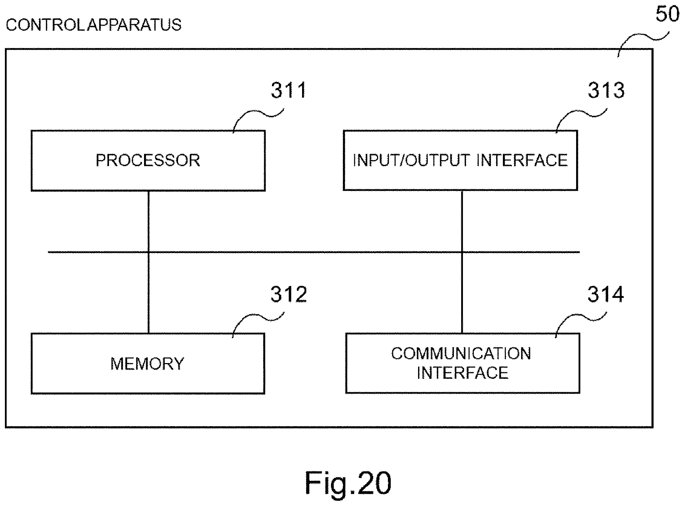

Subsequently, hardware of each apparatus constituting the transport system will be described. Fig. 20 is a diagram illustrating an example of a hardware configuration of the control apparatus 50.

The control apparatus 50 can be configured with an information processing apparatus (so-called, a computer), and includes a configuration illustrated in Fig. 20. For example, the control apparatus 50 includes a processor 311, a memory 312, an input/output interface 313, a communication interface 314, and the like. Constituent elements such as the processor 311 are connected to each other with an internal bus or the like, and are configured to be capable of communicating with each other.

However, the configuration illustrated in Fig. 20 is not to limit the hardware configuration of the control apparatus 50. The control apparatus 50 may include hardware not illustrated, or need not include the input/output interface 313 as necessary. The number of processors 311 and the like included in the control apparatus 50 is not to be limited to the example illustrated in Fig. 20, and for example, a plurality of processors 311 may be included in the control apparatus 50.

The processor 311 is, for example, a programmable device such as a central processing unit (CPU), a micro processing unit (MPU), and a digital signal processor (DSP). Alternatively, the processor 311 may be a device such as a field programmable gate array (FPGA) and an application specific integrated circuit (ASIC). The processor 311 executes various programs including an operating system (OS).

The memory 312 is a random access memory (RAM), a read only memory (ROM), a hard disk drive (HDD), a solid state drive (SSD), or the like. The memory 312 stores an OS program, an application program, and various pieces of data.

The input/output interface 313 is an interface of a display apparatus and an input apparatus (not illustrated). The display apparatus is, for example, a liquid crystal display or the like. The input apparatus is, for example, an apparatus that receives user operation, such as a keyboard and a mouse.

The communication interface 314 is a circuit, a module, or the like that performs communication with another apparatus. For example, the communication interface 314 includes a network interface card (NIC), a radio communication circuit, or the like.

The function of the control apparatus 50 is implemented by various processing modules. Each of the processing modules is, for example, implemented by the processor 311 executing a program stored in the memory 312. The program can be recorded on a computer readable storage medium. The storage medium can be a non-transitory storage medium, such as a semiconductor memory, a hard disk, a magnetic recording medium, and an optical recording medium. In other words, the present invention can also be implemented as a computer program product. The program can be updated through downloading via a network, or by using a storage medium storing a program. In addition, the processing module may be implemented by a semiconductor chip.

Note that the position information management apparatus 30, the transport planning apparatus 40, and the like can also be configured by information processing apparatuses similarly to the control apparatus 50, and because the basic hardware configurations are not different from that of the control apparatus 50, the descriptions thereof will be omitted.

### [Example Alterations]

Note that the configuration, the operation, and the like of the transport system described in the example embodiment are merely examples, and are not to limit the configuration and the like of the system. For example, the functions of the position information management apparatus 30 may be realized by the control apparatus 50. For example, the position information management apparatus 30 may execute a process related to determination of positions of object bodies, and the control apparatus 50 may determine the types of the object bodies.

Alternatively, the position information management apparatus 30 may be installed inside the field, and the control apparatus 50 may be implemented in a server on the network. In other words, the transport system disclosed in the present application may be realized as an edge cloud system.

In the example embodiment, when calculating the transport route of the transport robot pair, transport routes of other transport robot pairs are not taken into consideration. However, the transport route may be calculated in consideration of transport routes of other transport robot pairs. In this case, the route calculation section 504 may calculate the route with the costs of links used (links to be used) by other transport robot pairs as infinite.

Alternatively, the route calculation section 504 may count the number used as transport routes by transport robot pairs for each link, and calculate the transport route using the counted value as the degree of congestion of the link. The route calculation section 504 may treat the degree of congestion as the cost of the link and calculate the transport route so as to avoid links having high degrees of congestion.

In the example embodiment, a case in which cameras capable of detecting heights of object bodies (for example, depth cameras) are used has been described. However, in a case where it is not necessary to detect heights of object bodies, normal cameras may be used. Alternatively, infrared sensors or distance sensors may be used as sensors for detecting positions of object bodies.

In a case where a QR code (registered trademark) can be attached to an article 60, the code may include identification information of the article 60, and transport robots 10 may read the information. In this case, the transport robots 10 may compare read identification information with identification information of article 60 instructed to be transported by the control apparatus 50, and determine whether or not to transport the article 60 according to the comparison results.

By installing an article transport program in a storage section of a computer, the computer can be caused to function as a control apparatus 50. By causing the computer to execute the article transport program, an article transport method can be executed by the computer.
plurality of sequence diagrams used in the description above, a plurality of processes (processing) are described in order; however, the order of execution of the processes executed in each example embodiment is not limited to the described order. In each example embodiment, the illustrated order of processes can be changed as far as there is no problem with regard to processing contents, such as a change in which respective processes are executed in parallel, for example.

Although the industrial applicability of the present invention is apparent from the description, the present invention can be preferably applied to article transport in factories, distribution warehouses, and the like.

This application claims priority based on JP 2019-153964 filed on August 26, 2019.

### Reference Signs List

- 10, 10-1 to 10-4: Transport Robot
- 20, 20-1 to 20-3: Camera Apparatus
- 30: Position Information Management Apparatus
- 40: Transport Planning Apparatus
- 50, 104: Control Apparatus
- 60, 60-1, 60-2: Article
- 101: First Transport Robot
- 102: Second Transport Robot
- 103: Generation Apparatus
- 201, 301, 401, 501: Communication Control Section
- 202: Actuator Control Section
- 203: Holing Detection Section
- 302: Object Body Position Information Generation Section
- 303, 404, 506: Storage Section
- 311: Processor
- 312: Memory
- 313: Input/Output Interface
- 314: Communication Interface
- 402: Transport Plan Information Generation Section
- 403: Display Section
- 502: Field Information Management Section
- 503: Robot Selection Section
- 504: Route Calculation Section
- 505: Robot Control Section

## Claims

1. A transport system comprising:
first and second transport robots (10, 101, 102) configured to transport an article (60) together;
a generation apparatus (30, 103) configured to generate position information for the first transport robot (10, 101) and position information for the second transport robot (10, 102); and
a control apparatus (50, 104) configured to transmit, to the first and second transport robots (10, 101, 102), control information for transporting the article (60) with the first and second transport robots (10, 101, 102), based on the position information for the first transport robot and the position information for the second transport robot,
**characterised in that**
the control apparatus (50, 104) is configured to transmit control information for the first and second transport robots (10, 101, 102) to face each other over the article while holding the article (60),
the generation apparatus (30, 103) includes an object body position information generation section (302) and is configured to be connected to one or more cameras (20), wherein the object body position information generation section (302) is configured to determine whether a detected object included in an obtained image from the cameras (20) is the first or second transport robot (10, 101, 102) or not, based on the size of the first and second transport robots.

2. The transport system according to claim 1, further comprising:
a transport planning apparatus (40) configured to generate transport plan information including information related to a transport source and a transport destination of the article (60) transported by the first and second transport robots (10, 101, 102), wherein
the control apparatus (50, 104) is configured to identify a route for the first and second transport robots (10, 101, 102) to transport the article (60) from the transport source to the transport destination, based on the transport plan information generated.

3. The transport system according to claim 1 or 2, wherein
the control apparatus (50, 104) is configured to identify a route for transporting the article (60), based on position information of an obstacle in a field for transporting the article (60), and transmit control information for transporting the article by the route identified, to the first and second transport robots (10, 101, 102).

4. The transport system according to claim 3, wherein
the control apparatus (50, 104) is configured to calculate the route for transporting the article in consideration of the obstacle in a case where the obstacle exists on the route identified.

5. The transport system according to claim 3, wherein the generation apparatus (30, 103) includes a position information management apparatus (30) connected to one or more cameras (20) positioned above the field for transporting the article, wherein the position information management system (30) is configured to identify object bodies located in the field based on image data received from camera apparatus (20) and to generate the position information, the position information including position information of object bodies including transport robots (10), articles (60), and obstacles.

6. A control apparatus configured to be
connected to a generation apparatus (30, 103) configured to generate position information for a first transport robot (10,101) and position information for a second transport robot (10, 102), the first transport robot and the second transport robot being configured to transport an article (60) together, wherein
the control apparatus (50, 104) is configured to transmit, to the first and second transport robots (10, 101, 102), control information for transporting the article (60) with the first and second transport robots (10, 101, 102), based on the position information for the first transport robot and the position information for the second transport robot,
**characterised in that**
the control apparatus (50, 104) is configured to transmit control information for the first and second transport robots (10, 101, 102) to face each other over the article while holding the article (60),
the generation apparatus (30, 103) includes an object body position information generation section (302) and is configured to be connected to one or more cameras (20), wherein the object body position information generation section (302) is configured to determine whether a detected object included in an obtained image from the cameras (20) is the first or second transport robot (10, 101, 102) or not, based on the size of the first and second transport robots.

7. The control apparatus according to claim 6, wherein
the control apparatus (50, 104) is configured to be connected to a transport planning apparatus (40) configured to generate transport plan information including information related to a transport source and a transport destination of the article transported by the first and second transport robots (10, 101, 102), and
the control apparatus (50, 104) is configured to identify a route for the first and second transport robots (10, 101, 102) to transport the article from the transport source to the transport destination, based on the transport plan information generated.

8. The control apparatus according to claim 6 or 7, wherein
the control apparatus (50, 104) is configured to identify a route for transporting the article, based on position information of an obstacle in a field for transporting the article (60), and transmit control information for transporting the article by the route identified, to the first and second transport robots.

9. The control apparatus according to claim 8, wherein
the control apparatus (50, 104) is configured to calculate the route for transporting the article in consideration of the obstacle in a case where the obstacle exists on the route identified.

10. The control apparatus of claim 8, wherein the generation apparatus (30, 103) includes a position information management apparatus (30) connected to one or more cameras (20) positioned above the field for transporting the article, wherein the position information management system (30) is configured to identify object bodies located in the field based on image data received from camera apparatus (20) and to generate the position information, the position information including position information of object bodies including transport robots (10), articles (60), and obstacles.

11. A transport method performed in a transport system provided with first and second transport robots configured to transport an article together, the transport method comprising:
generating, by a generation apparatus (30, 103) connected to one or more cameras (20), position information for the first transport robot and position information for the second transport robot; and
transmitting, to the first and second transport robots, control information for transporting the article with the first and second transport robots, based on the position information for the first transport robot and the position information for the second transport robot,
**characterised in that**
the transmitting the control information transmits control information for the first and second transport robots (10, 101, 102) to face each other over the article while holding the article (60),
determining, by an object body position information generation section (302) of the generation apparatus (30, 103), whether a detected object included in an obtained image from the cameras (20) is the first or second transport robot (10, 101, 102) or not, based on the size of the first and second transport robots.

12. The transport method according to claim 11, further comprising:
generating transport plan information including information related to a transport source and a transport destination of the article transported by the first and second transport robots; and
identifying a route for the first and second transport robots to transport the article from the transport source to the transport destination, based on the transport plan information generated.

13. The transport method according to claim 11 or 12, further comprising:
identifying a route for transporting the article based on position information of an obstacle in a field for transporting the article; and
transmitting control information for transporting the article by the route identified to the first and second transport robots.

14. The transport method according to claim 13, wherein
the identifying the route calculates the route for transporting the article in consideration of the obstacle in a case where the obstacle exists on the route identified.

15. The transport method of claim 13, wherein the position information is generated using a position information management apparatus (30) connected to one or more cameras (20) positioned above the field for transporting the article, wherein the position information management system (30) is configured to identify object bodies located in the field based on image data received from camera apparatus (20) and to generate the position information, the position information including position information of object bodies including transport robots (10), articles (60), and obstacles.

## Patentansprüche

1. Transportsystem, umfassend:
erste und zweite Transportroboter (10, 101, 102), die zum Transportieren eines Artikels (60) miteinander konfiguriert sind;
eine Erzeugungsvorrichtung (30, 103), die zum Erzeugen von Positionsinformationen für den ersten Transportroboter (10, 101) und Positionsinformationen für den zweiten Transportroboter (10, 102) konfiguriert ist; und
eine Steuervorrichtung (50, 104), die zum Übertragen, an den ersten und den zweiten Transportroboter (10, 101, 102), von Steuerungsinformationen zum Transportieren des Artikels (60) mit dem ersten und dem zweiten Transportroboter (10, 101, 102) auf Basis der Positionsinformationen für den ersten Transportroboter und der Positionsinformationen für den zweiten Transportroboter konfiguriert ist,
**dadurch gekennzeichnet, dass**
die Steuervorrichtung (50, 104) zum Übertragen von Steuerungsinformationen, damit der erste und der zweite Transportroboter (10, 101, 102) einander über den Artikel gegenüberstehen, während sie den Artikel (60) halten, konfiguriert ist,
die Erzeugungsvorrichtung (30, 103) einen Objektkörperpositionsinformations-Erzeugungsteil (302) beinhaltet und konfiguriert ist, um mit einer oder mehr Kameras (20) verbunden zu sein, wobei der Objektkörperpositionsinformations-Erzeugungsteil (302) zum Bestimmen, ob ein erkanntes Objekt, das in einem erhaltenen Bild von den Kameras (20) enthalten ist, der erste oder der zweite Transportroboter (10, 101, 102) ist oder nicht, auf Basis der Größe des ersten und des zweiten Transportroboters konfiguriert ist.

2. Transportsystem nach Anspruch 1, das ferner umfasst:
eine Transportplanungsvorrichtung (40), die zum Erzeugen von Transportplaninformationen konfiguriert ist, die Informationen beinhalten, die auf einen Transportursprung und ein Transportziel des von dem ersten und dem zweiten Transportroboter (10, 101, 102) transportierten Artikels (60) bezogen sind, wobei
die Steuervorrichtung (50, 104) zum Identifizieren eines Wegs für den ersten und den zweiten Transportroboter (10, 101, 102) zum Transportieren des Artikels (60) vom Transportursprung zum Transportziel auf Basis der erzeugten Transportplaninformationen konfiguriert ist.

3. Transportsystem nach Anspruch 1 oder 2, wobei
die Steuervorrichtung (50, 104) zum Identifizieren eines Wegs zum Transportieren des Artikels (60) auf Basis von Positionsinformationen eines Hindernisses in einem Feld zum Transportieren des Artikels (60) und zum Übertragen von Steuerungsinformationen zum Transportieren des Artikels auf dem identifizierten Weg an den ersten und den zweiten Transportroboter (10, 101, 102) konfiguriert ist.

4. Transportsystem nach Anspruch 3, wobei
die Steuervorrichtung (50, 104) zum Berechnen des Wegs zum Transportieren des Artikels unter Berücksichtigung des Hindernisses in einem Fall, in dem sich das Hindernis auf dem identifizierten Weg befindet, konfiguriert ist.

5. Transportsystem nach Anspruch 3, wobei die Erzeugungsvorrichtung (30, 103) eine Positionsinformationsmanagementvorrichtung (30) beinhaltet, die mit einer oder mehr über dem Feld zum Transportieren des Artikels positionierten Kameras (20) verbunden ist, wobei das Positionsinformationsmanagementsystem (30) zum Identifizieren von Objektkörpern, die sich in dem Feld befinden, auf Basis von von der Kameravorrichtung (20) empfangenen Bilddaten und zum Erzeugen der Positionsinformationen konfiguriert ist, wobei die Positionsinformationen Positionsinformationen von Objektkörpern einschließlich Transportrobotern (10), Artikeln (60) und Hindernissen beinhalten.

6. Steuervorrichtung, die konfiguriert ist, um mit einer Erzeugungsvorrichtung (30, 103) verbunden zu sein, die zum Erzeugen von Positionsinformationen für einen ersten Transportroboter (10, 101) und Positionsinformationen für einen zweiten Transportroboter (10, 102) konfiguriert ist, wobei der erste Transportroboter und der zweite Transportroboter zum Transportieren eines Artikels (60) miteinander konfiguriert sind, wobei
die Steuervorrichtung (50, 104) zum Übertragen, an den ersten und den zweiten Transportroboter (10, 101, 102), von Steuerungsinformationen zum Transportieren des Artikels (60) mit dem ersten und dem zweiten Transportroboter (10, 101, 102) auf Basis der Positionsinformationen für den ersten Transportroboter und der Positionsinformationen für den zweiten Transportroboter konfiguriert ist, **dadurch gekennzeichnet, dass**
die Steuervorrichtung (50, 104) zum Übertragen von Steuerungsinformationen, damit der erste und der zweite Transportroboter (10, 101, 102) einander über den Artikel gegenüberstehen, während sie den Artikel (60) halten, konfiguriert ist,
die Erzeugungsvorrichtung (30, 103) einen Objektkörperpositionsinformations-Erzeugungsteil (302) beinhaltet und konfiguriert ist, um mit einer oder mehr Kameras (20) verbunden zu sein, wobei der Objektkörperpositionsinformations-Erzeugungsteil (302) zum Bestimmen, ob ein erkanntes Objekt, das in einem erhaltenen Bild von den Kameras (20) enthalten ist, der erste oder der zweite Transportroboter (10, 101, 102) ist oder nicht, auf Basis der Größe des ersten und des zweiten Transportroboters konfiguriert ist.

7. Steuervorrichtung nach Anspruch 6, wobei
die Steuervorrichtung (50, 104) konfiguriert ist, um mit einer Transportplanungsvorrichtung (40) verbunden zu sein, die zum Erzeugen von Transportplaninformationen konfiguriert ist, die auf einen Transportursprung und ein Transportziel des von dem ersten und dem zweiten Transportroboter (10, 101, 102) transportierten Artikels bezogen sind, und die Steuervorrichtung (50, 104) zum Identifizieren eines Wegs für den ersten und den zweiten Transportroboter (10, 101, 102) zum Transportieren des Artikels vom Transportursprung zum Transportziel auf Basis der erzeugten Transportplaninformationen konfiguriert ist.

8. Steuervorrichtung nach Anspruch 6 oder 7, wobei
die Steuervorrichtung (50, 104) zum Identifizieren eines Wegs zum Transportieren des Artikels auf Basis von Positionsinformationen eines Hindernisses in einem Feld zum Transportieren des Artikels (60) und zum Übertragen von Steuerungsinformationen zum Transportieren des Artikels auf dem identifizierten Weg an den ersten und den zweiten Transportroboter konfiguriert ist.

9. Steuervorrichtung nach Anspruch 8, wobei
die Steuervorrichtung (50, 104) zum Berechnen des Wegs zum Transportieren des Artikels unter Berücksichtigung des Hindernisses in einem Fall, in dem sich das Hindernis auf dem identifizierten Weg befindet, konfiguriert ist.

10. Steuervorrichtung nach Anspruch 8, wobei die Erzeugungsvorrichtung (30, 103) eine Positionsinformationsmanagementvorrichtung (30) beinhaltet, die mit einer oder mehr über dem Feld zum Transportieren des Artikels positionierten Kameras (20) verbunden ist, wobei das Positionsinformationsmanagementsystem (30) zum Identifizieren von Objektkörpern, die sich in dem Feld befinden, auf Basis von von der Kameravorrichtung (20) empfangenen Bilddaten und zum Erzeugen der Positionsinformationen konfiguriert ist,, wobei die Positionsinformationen Positionsinformationen von Objektkörpern einschließlich Transportrobotern (10), Artikeln (60) und Hindernissen beinhalten.

11. Transportverfahren, das in einem Transportsystem durchgeführt wird, das mit ersten und zweiten Transportrobotern versehen ist, die zum Transportieren eines Artikels miteinander konfiguriert sind, wobei das Transportverfahren umfasst:
Erzeugen, durch eine Erzeugungsvorrichtung (30, 103), die mit einer oder mehr Kameras (20) verbunden ist, von Positionsinformationen für den ersten Transportroboter; und
Übertragen, an den ersten und den zweiten Transportroboter, von Steuerungsinformationen zum Transportieren des Artikels mit dem ersten und dem zweiten Transportroboter auf Basis der Positionsinformationen für den ersten Transportroboter und der Positionsinformationen für den zweiten Transportroboter,
**dadurch gekennzeichnet, dass**
das Übertragen der Steuerungsinformationen Steuerungsinformationen überträgt, damit der erste und der zweite Transportroboter einander über den Artikel gegenüberstehen, während sie den Artikel (60) halten,
Bestimmen, durch einen Objektkörperpositionsinformations-Erzeugungsteil (302) der Erzeugungsvorrichtung (30, 103), ob ein erkanntes Objekt, das in einem erhaltenen Bild von den Kameras (20) enthalten ist, der erste oder der zweite Transportroboter (10, 101, 102) ist oder nicht, auf Basis der Größe des ersten und des zweiten Transportroboters konfiguriert ist.

12. Transportverfahren nach Anspruch 11, das ferner umfasst:
Erzeugen von Transportplaninformationen, die Informationen beinhalten, die auf einen Transportursprung und ein Transportziel des von dem ersten und dem zweiten Transportroboter transportierten Artikels bezogen sind; und
das Identifizieren eines Wegs für den ersten und den zweiten Transportroboter zum Transportieren des Artikels vom Transportursprung zum Transportziel auf Basis der erzeugten Transportplaninformationen konfiguriert ist.

13. Transportverfahren nach Anspruch 11 oder 12, das ferner umfasst:
Identifizieren eines Wegs zum Transportieren des Artikels auf Basis von Positionsinformationen eines Hindernisses in einem Feld zum Transportieren des Artikels; und
Übertragen von Steuerungsinformationen zum Transportieren des Artikels auf dem identifizierten Weg an den ersten und den zweiten Transportroboter.

14. Transportverfahren nach Anspruch 13, wobei
das Identifizieren des Wegs den Weg zum Transportieren des Artikels unter Berücksichtigung des Hindernisses in einem Fall, in dem sich das Hindernis auf dem identifizierten Weg befindet, berechnet.

15. Transportverfahren nach Anspruch 13, wobei die Positionsinformationen unter Verwendung einer Positionsinformationsmanagementvorrichtung (30) erzeugt werden, die mit einer oder mehr über dem Feld zum Transportieren des Artikels positionierten Kameras (20) verbunden ist, wobei das Positionsinformationsmanagementsystem (30) zum Identifizieren von Objektkörpern, die sich in dem Feld befinden, auf Basis von von der Kameravorrichtung (20) empfangenen Bilddaten und zum Erzeugen der Positionsinformationen konfiguriert ist, wobei die Positionsinformationen Positionsinformationen von Objektkörpern einschließlich Transportrobotern (10), Artikeln (60) und Hindernissen beinhalten.

## Revendications

1. Système de transport comprenant :
des premier et second robots de transport (10, 101, 102) configurés pour transporter ensemble un article (60) ;
un appareil de génération (30, 103) configuré pour générer des informations de position du premier robot de transport (10, 101) et des informations de position du second robot de transport (10, 102) ; et
un appareil de commande (50, 104) configuré pour transmettre, aux premier et second robots de transport (10, 101, 102), des informations de commande pour le transport de l'article (60) avec les premier et second robots de transport (10, 101, 102), sur la base des informations de position du premier robot de transport et des informations de position du second robot de transport,
**caractérisé en ce que**
l'appareil de commande (50, 104) est configuré pour transmettre des informations de commande pour que les premier et second robots de transport (10, 101, 102) se fassent face au-dessus de l'article tout en tenant l'article (60),
l'appareil de génération (30, 103) comporte une section de génération d'informations de position de corps d'objet (302) et est configuré pour être connecté à une ou plusieurs caméras (20), dans lequel la section de génération d'informations de position de corps d'objet (302) est configurée pour déterminer qu'un objet détecté inclus dans une image obtenue à partir des caméras (20) est le premier ou le second robot de transport (10, 101, 102), en fonction de la taille des premier et second robots de transport.

2. Système de transport selon la revendication 1, comprenant en outre :
un appareil de planification de transport (40) configuré pour générer des informations de plan de transport, comportant des informations relatives à une source de transport et à une destination de transport de l'article (60) transporté par les premier et second robots de transport (10, 101, 102), dans lequel
l'appareil de commande (50, 104) est configuré pour identifier un trajet de transport par les premier et second robots de transport (10, 101, 102) de l'article (60) depuis la source de transport jusqu'à la destination du transport, sur la base des informations de plan de transport générées.

3. Système de transport selon la revendication 1 ou 2, dans lequel
l'appareil de commande (50, 104) est configuré pour identifier un trajet de transport de l'article (60), sur la base d'informations de position d'un obstacle dans un champ pour transporter l'article (60), et transmettre aux premier et second robots de transport (10, 101, 102) des informations de commande pour transporter l'article sur le trajet identifié.

4. Système de transport selon la revendication 3, dans lequel
l'appareil de commande (50, 104) est configuré pour calculer le trajet de transport de l'objet en tenant compte de l'obstacle dans le cas où l'obstacle existe sur le trajet identifié.

5. Système de transport selon la revendication 3, dans lequel l'appareil de génération (30, 103) comprend un appareil de gestion d'informations de position (30) connecté à une ou plusieurs caméras (20) positionnées au-dessus du champ de transport de l'article, dans lequel le système de gestion d'informations de position (30) est configuré pour identifier des corps d'objets situés dans le champ sur la base de données d'image reçues depuis l'appareil de caméra (20) et générer les informations de position, les informations de position comportant des informations de position de corps d'objets comportant des robots de transport (10), des objets (60) et des obstacles.

6. Appareil de commande configuré pour être connecté à un appareil de génération (30, 103) configuré pour générer des informations de position d'un premier robot de transport (10, 101) et des informations de position d'un second robot de transport (10, 102), le premier robot de transport et le second robot de transport étant configurés pour transporter ensemble un article (60), dans lequel
l'appareil de commande (50, 104) est configuré pour transmettre, aux premier et second robots de transport (10, 101, 102), des informations de commande pour transporter l'article (60) avec les premier et second robots de transport (10, 101, 102), sur la base des informations de position du premier robot de transport et des informations de position du second robot de transport,
**caractérisé en ce que**
l'appareil de commande (50, 104) est configuré pour transmettre des informations de commande pour que les premier et second robots de transport (10, 101, 102) se fassent face au-dessus de l'article tout en tenant l'article (60),
l'appareil de génération (30, 103) comporte une section de génération d'informations de position de corps d'objet (302) et est configuré pour être connecté à une ou plusieurs caméras (20), dans lequel la section de génération d'informations de position de corps d'objet (302) est configurée pour déterminer qu'un objet détecté inclus dans une image obtenue à partir des caméras (20) est le premier ou le second robot de transport (10, 101, 102), en fonction de la taille des premier et second robots de transport.

7. Appareil de commande selon la revendication 6, dans lequel
l'appareil de commande (50, 104) est configuré pour être connecté à un appareil de planification de transport (40) configuré pour générer des informations de plan de transport comportant des informations relatives à une source de transport et à une destination de transport de l'article transporté par les premier et second robots de transport (10, 101, 102), et
l'appareil de commande (50, 104) est configuré pour identifier un trajet de transport par les premier et second robots de transport (10, 101, 102) de l'article depuis la source de transport jusqu'à la destination du transport, sur la base des informations de plan de transport générées.

8. Appareil de commande selon la revendication 6 ou 7, dans lequel
l'appareil de commande (50, 104) est configuré pour identifier un trajet de transport de l'article, sur la base d'informations de position d'un obstacle dans un champ de transport de l'article (60), et transmettre des informations de commande pour transporter l'article sur le trajet identifié, aux premier et second robots de transport.

9. Appareil de commande selon la revendication 8, dans lequel
l'appareil de commande (50, 104) est configuré pour calculer le trajet de transport de l'objet en tenant compte de l'obstacle dans le cas où l'obstacle existe sur le trajet identifié.

10. Appareil de commande selon la revendication 8, dans lequel l'appareil de génération (30, 103) comporte un appareil de gestion d'informations de position (30) connecté à une ou plusieurs caméras (20) positionnées au-dessus du champ de transport de l'article, dans lequel le système de gestion d'informations de position (30) est configuré pour identifier des corps d'objets situés dans le champ sur la base des données d'image reçues depuis l'appareil de caméra (20) et générer les informations de position, les informations de position comportant des informations de position de corps d'objets comportant des robots de transport (10), des articles (60) et des obstacles.

11. Procédé de transport réalisé dans un système de transport équipé de premier et second robots de transport configurés pour transporter ensemble un article, le procédé de transport comprenant :
la génération, par un appareil de génération (30, 103) connecté à une ou plusieurs caméras (20), d'informations de position du premier robot de transport et d'informations de position du second robot de transport ; et
la transmission, aux premier et second robots de transport, d'informations de commande pour transporter l'article avec les premier et second robots de transport, sur la base des informations de position du premier robot de transport et des informations de position du second robot de transport,
**caractérisé en ce que**
la transmission des informations de commande transmet des informations de commande pour que les premier et second robots de transport (10, 101, 102) se fassent face au-dessus de l'article tout en tenant l'article (60),
la détermination, par une section de génération d'informations de position de corps d'objet (302) de l'appareil de génération (30, 103), qu'un objet détecté inclus dans une image obtenue à partir des caméras (20) est le premier ou le second robot de transport (10, 101, 102), en fonction de la taille des premier et second robots de transport.

12. Procédé de transport selon la revendication 11, comprenant en outre :
la génération d'informations de plan de transport comportant des informations relatives à une source de transport et à une destination de transport de l'article transporté par les premier et second robots de transport ; et
l'identification d'un trajet de transport par les premier et second robots de transport de l'article depuis la source de transport jusqu'à la destination de transport, sur la base des informations de plan de transport générées.

13. Procédé de transport selon la revendication 11 ou 12, comprenant en outre :
l'identification d'un trajet de transport de l'article sur la base d'informations de position d'un obstacle dans un champ pour transporter l'article ; et
la transmission aux premier et second robots de transport d'informations de commande pour transporter l'article sur le trajet identifié.

14. Procédé de transport selon la revendication 13, dans lequel
l'identification du trajet calcule le trajet de transport de l'article en tenant compte de l'obstacle dans le cas où l'obstacle existe sur le trajet identifié.

15. Procédé de transport selon la revendication 13, dans lequel les informations de position sont générées à l'aide d'un appareil de gestion d'informations de position (30) connecté à une ou plusieurs caméras (20) positionnées au-dessus du champ pour transporter l'article, dans lequel le système de gestion d'informations de position (30) est configuré pour identifier des corps d'objets situés dans le champ sur la base de données d'image reçues depuis l'appareil de caméra (20) et générer les informations de position, les informations de position comportant des informations de position de corps d'objets comportant des robots de transport (10), des objets (60) et des obstacles.
